# EUROPEAN PATENT SPECIFICATION

(11) **EP 3 410 079 B1**
(45) Date of publication and mention of the grant of the patent: **02.06.2021**
(21) Application number: 17305646.6
(22) Date of filing: 02.06.2017
(51) Int. Cl.: G01F 15/14, F01N 3/20, G01F 15/08, F01N 13/00, G01F 23/00

(54) **FLUID SENSOR PROTECTION ASSEMBLY**
FLÜSSIGKEITSSENSORSCHUTZANORDNUNG
ENSEMBLE DE PROTECTION DE CAPTEUR DE FLUIDE

(43) Date of publication of application: 05.12.2018
(73) Proprietor: MEAS France, 31027 Toulouse Cedex 3 (FR)
(72) Inventor: CHAVARRIA, Gael, 31300 Toulouse (FR); LEGER, Vincent, 31200 Touliuse (FR); TOULON-MEEKHUN, Dariga, 31520 Ramonville (FR)
(74) Representative: Grünecker Patent- und Rechtsanwälte PartG mbB

(56) References cited:
- US-A1- 2008 247 912
- US-A1- 2011 301 908
- US-A1- 2015 260 687
- US-A1- 2015 306 529

## Description

The invention relates to a urea sensor protection assembly for protecting at least one fluid sensor of a fluid sensor system against bubbles and/or particles, in particular for protecting at least one urea sensor of a urea sensor system.

In the following, the terms "urea sensor protection assembly" and "fluid sensor protection system" are used synonymously. Fluid sensor systems and the corresponding sensor protection assemblies are known in the prior art and are generally used in tanks for fluids, in particular for fluids such as urea solution (diesel exhaust fluid, "DEF") for cleaning exhaust gases of diesel engines. Other types of fluids in which a sensor protection assembly and a fluid sensor system according to the invention may be used, are fluids based on oil. The fluid sensors are typically used for monitoring certain properties of the fluid in order to analyze the quality of the solution. However, certain circumstances may negatively influence the measurements. A first problem may be that some fluids tend to create bubbles during movement of the tank. For example, during filling of the tank, a large amount of gas bubbles may be created. But also vibrations under operating conditions may cause the fluid to produce bubbles. These bubbles may influence measurements of the fluid sensor. The sensors which are typically used can be of different types, such as ultrasonic sensors or optical sensors, in particular infrared sensors. These sensors are often used for measuring the speed of sound or light in the fluid and/or for measuring the density of the fluid. These measurements can be used for determining the quality and/or the filling level of the fluid in the tank. It is known that bubbles in the fluid negatively influence these kind of measurements. Other known problems which may disturb measurements of the fluid sensor are particles, for example, particles formed by debris or frozen fluid. Known sensor protection assemblies use filter members such as mesh material or semi permeable membranes to protect a sensor, whilst also allowing fluid to reach the sensor at the same time. These assemblies are useful and provide good protection to a fluid sensor. However, these assemblies usually require a large amount of parts and are, consequently, time and cost consuming to produce.

Patent application US 2011/0301908 A1 discloses an assembly protecting a gas sensor from particulate matters through a double cover with flow-through openings.

It is therefore an object of the invention to provide a urea sensor protection assembly and a urea sensor system which allow to effectively protect a fluid sensor of a sensor system, and, at the same time, are easily and cost-efficient to produce.

For the urea sensor protection assembly according to the invention, this object is reached in that the assembly comprises a housing for receiving, and preferably also supporting, the at least one fluid sensor, wherein the housing comprises a bottom wall and a top wall which are spaced apart from each other in a vertical direction, wherein the bottom wall is provided with at least one lower flow-through opening and the top wall is provided with at least one upper flow-through opening, wherein the lower and the upper flow-through openings are covered on an outside of the housing by a lower and an upper cover member, respectively, wherein each cover member is spaced apart from the corresponding flow-through opening in the vertical direction and provides at least one outer flow-through opening, and wherein at least one continuous flow-through passage extends between the at least one lower outer flow-through opening and the at least one upper outer flow-through opening and in that the housing is further provided with at least one bubble outlet opening that opens the housing to an outside of the assembly. In the following, the invention is described with respect to a solution as a fluid, which may be in particular a urea solution. However, as described above, the invention may also be used for other fluids.

The solution according to the invention allows to effectively let solution pass through the assembly in order to reach a fluid sensor. This is allowed by the continuous flow-through passage. If a sensor is arranged in the housing, the continuous flow-through passage lets solution pass the urea sensor in order to be analyzed by the same. At the same time, the cover members which cover the lower flow-through opening and the upper flow-through opening in the housing effectively prevent bubbles and/or debris from entering the housing and from disturbing the measurement of the fluid sensor. The bubble outlet opening in the housing is advantageous in the case that bubbles are formed in the housing and are prevented from leaving the housing through one of the flow-through openings, for example when the bubbles are too big to pass through the flow-through openings. Consequently, the at least one bubble outlet opening forms a vent hole for removing gas from the housing.

The invention further relates to a urea sensor system which comprises, additionally to the urea sensor protection assembly according to the invention, at least one fluid sensor which is received in the housing. Such a fluid sensor system will benefit from the advantages of the fluid sensor protection assembly as described above.

By covering the lower flow-through opening and the upper flow-through opening, the cover members each overlap with their corresponding flow-through opening when seen parallel to the vertical direction. It should be noted that the terms "bottom" and "top" refer to the vertical direction. The vertical direction may be parallel with a gravitational direction. The gravitational direction is opposite to a bubble ascension direction, which is defined by the direction along which bubbles ascend in the solution. The housing and its walls may be formed as a single piece or as an assembled structure which is composed of a plurality of pieces. However, the housing is preferably formed as one piece including the bottom wall and the top wall.

In the following, further improvements of the invention are described. The additional improvements may be combined independently of each other, depending on whether a particular advantage of a particular improvement is needed in a specific application.

According to a first advantageous improvement of the fluid sensor protection assembly according to the invention, the at least one lower outer flow-through opening may be formed between the bottom wall and the lower cover member and/or the at least one upper outer flow-through opening may be formed between the top wall and the upper cover member. Thereby, a simple construction can be achieved. Further, if at least one cover member is formed as a plate, then the gap between this cover member and the corresponding wall may form the respective outer flow-through opening. Such an outer flow-through opening may be large and may facilitate the flow of solution towards and from the corresponding flow-through opening in the housing. In such an arrangement, the at least one outer flow-through opening may have the shape of a slit. In particular in this case, the slit preferably has a height measured along the vertical direction between 1 and 2 mm, more preferably between 1,3 and 1,7 mm, most preferably 1,4 to 1,6 mm.

In the alternative, the at least one lower outer flow-through opening and/or the at least one upper outer flow-through opening may be formed as through holes in the lower cover member and/or upper cover member, respectively. Such an arrangement may be beneficial if the at least one cover member is fixated to the corresponding wall of the housing, in particular if no gap is formed that may serve as an outer flow-through opening. The size of the through hole may be chosen depending on the amount of fluid to pass through the hole.

A lower section of the continuous flow-through passage may extend basically horizontally from the lower flow-through opening to the lower outer flow-through opening. The lower section may in particular extend basically horizontally between the bottom wall and the lower cover member. Accordingly, an upper section of the continuous flow-through passage may extend basically horizontally from the upper flow-through opening to the upper outer flow-through opening, in particular between the top wall and the upper cover member. The basically horizontal arrangement may prevent bubbles which have already entered one of the outer flow-through openings to reach the corresponding flow-through opening in the housing. At the same time, the basically horizontal sections allow solution to flow through the continuous flow-through passage. The term "horizontal" refers to a direction perpendicular to the vertical direction. "Basically horizontal" refers to deviations from an exact horizontal alignment of up to 5°.

Due to the sections as described above, the at least one lower outer flow-through opening may be spaced apart from the at least one lower flow-through opening in the horizontal direction.

The at least one upper outer flow-through opening may be spaced apart from the upper flow-through opening in the horizontal direction, accordingly.

The continuous flow-through passage may meander through the assembly as a result of the relative positions of the outer flow-through openings to the flow-through openings in the housing. In particular, the continuous flow-through passage may be arranged along a zigzag course through the assembly, in particular as a result of the horizontal sections.

In order to improve the protection from bubbles, the upper and/or the lower section of the continuous flow-through passage should each have a sufficient section length. Preferably, at least one of the sections has a section length that is at least two times, more preferably at least three times, and most preferably four or more times, the smallest distance between the at least one cover member and its corresponding wall. If at least one outer flow-through opening is formed between the cover member and the corresponding wall, then this smallest distance may be identical with a gap width of the gap that is formed between the cover member and the corresponding wall, in particular measured along the vertical direction. Depending on the available space, at least one of the sections may also have a section length that is at least 1,5 times the smallest distance between the at least one cover member and its corresponding wall.

At least one of the sections may have a section length that is at least two times, more preferably at least three times, and most preferably four or more times the diameter of its corresponding flow-through opening in the housing. If said flow-through opening in the housing is not formed as a through hole with a circular shape, then the diameter is measured as the smallest width of the through hole perpendicular to the vertical direction. Depending on the available space, at least one of the sections may also have a section length that is at least 1,3, more preferably at least 1,5 times the diameter of its corresponding flow-through opening in the housing. At least one of the sections may have a section length that is preferably at least 4 mm, more preferably at least 5 mm, and most preferably at least 6 mm measured along the horizontal direction.

The flow-through openings in the housing are preferably formed as through holes. A preferred embodiment comprises at least one flow-through opening in the housing with a circular shape and a diameter of 2 to 3 mm, more preferably 2,2 to 2,8 mm, and most preferably 2,4 to 2,6 mm. Another preferred embodiment comprises at least one flow-through opening in the housing with a circular shape and a diameter of 3,5 to 4,5 mm, more preferably 3,7 to 4,3 mm, and most preferably 3,9 to 4,1 mm. A third preferred embodiment comprises at least one flow-through opening in the housing with an overall slit-like shape, wherein the slit has a length of 10 to 14 mm, more preferably 11 to 13 mm, and most preferably 11,5 to 12,5 mm. The slit preferably has a width of 3,5 to 4,5 mm, more preferably 3,7 to 4,3 mm, and most preferably 3,9 to 4,1 mm.

According to another advantageous improvement of the fluid sensor protection assembly according to the invention, the at least one upper flow-through opening and the at least one lower flow-through opening may be aligned with each other in the vertical direction. In other words, if seen along the vertical direction, the flow-through openings may overlap with each other. This may facilitate the flow of solution through the assembly, in particular through the housing where a fluid sensor may be placed. Further, this may facilitate the removal of bubbles, in particular if a bubble enters the housing through the lower flow-through opening. Such a bubble may ascend against the gravitational direction and directly leave the housing through the upper flow-through opening.

The at least one upper flow-through opening is preferably arranged and sized similar to the at least one lower flow-through opening. In particular, the at least one upper flow-through opening and the at least one lower flow-through opening are preferably arranged and sized such that they are mirror symmetrical with each other with respect to a mirror plane of symmetry which extends parallel with the horizontal direction between the bottom wall and the top wall.

The at least one bubble outlet opening preferably has a height measured along the vertical direction which is between 0,5 and 1,5 mm, more preferably 0,8 to 1,2 mm. It may have the shape of a slit which extends along the horizontal direction. The width of the slit measured parallel with the horizontal direction may be larger than the height. Just by way of example, the width may be larger than 8 mm.

In order to facilitate the removal of bubbles from the housing, the at least one bubble outlet opening is preferably arranged adjacent to the top wall. Due to this arrangement, bubbles that rise towards the top wall of the housing and form an accumulation of gas under the top wall may easily leave the housing through the at least one bubble outlet opening.

According to another advantageous improvement of the fluid sensor protection assembly according to the invention, at least one of the cover members may be formed monolithically with the housing. Thereby, a simple and solid design of the assembly may be achieved.

Additionally or in the alternative, at least one of the cover members may be formed by an outer housing which at least partially surrounds the housing. This arrangement may facilitate assembling the assembly. Further, cover members may be formed independently from the housing such that different combinations of housings and cover members can be produced.

In order to facilitate the removal of bubbles from the housing and, at the same time prevent bubbles from entering through one of the flow-through openings into the housing, at least one of the flow-through openings may have a cross section parallel with the vertical direction that tapers in the direction of the corresponding cover member. As a consequence, such flow-through opening has an overall funnel-like shape with the thinner side of the funnel pointing towards outside of the housing.

In the following, the invention and its improvements are described in greater detail using exemplary embodiments and with reference to the Figures. As described above, the various features shown in the embodiments may be used independently of each other in specific applications.

In the following Figures, elements having the same function and/or the same structure will be referenced by the same reference signs.

In the drawings:
- Fig. 1: shows a first embodiment of a fluid sensor system with a fluid sensor protection assembly according to the invention in a schematic cross-sectional view;
- Fig. 2: shows a second embodiment of a fluid sensor system with a fluid sensor protection assembly according to the invention in a schematic cross-sectional view; and
- Fig. 3: shows a third embodiment of a fluid sensor system with a fluid sensor protection assembly according to the invention in schematic view.

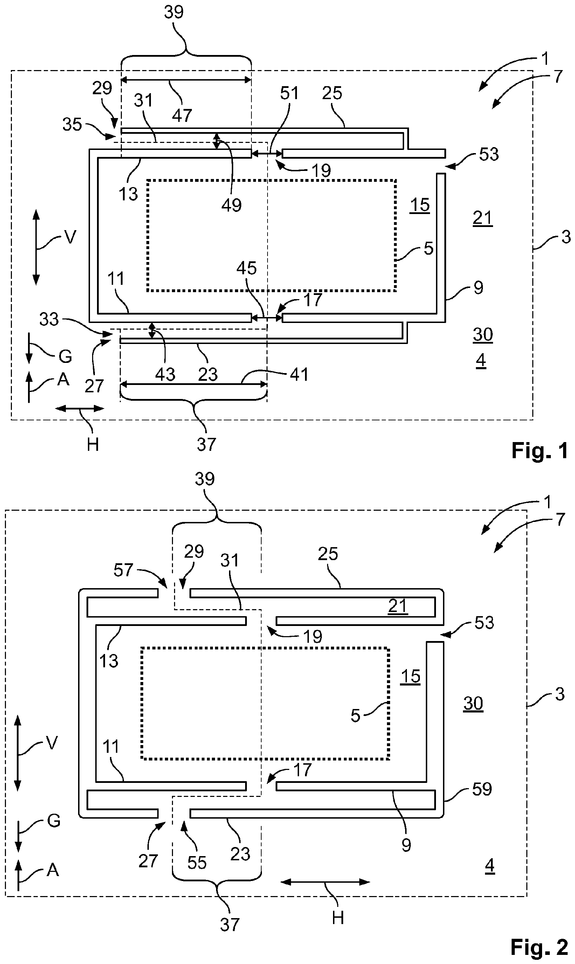

In the following, a first advantageous embodiment of a fluid sensor protection assembly 1, in the following named assembly 1, is described with respect to Fig. 1.

The assembly 1 may in particular be used inside a tank 3 for solution 4, preferably a urea solution such as diesel exhaust fluid (DEF). The tank 3 is indicated by the slash-dotted line. The assembly 1 may be provided with a fluid sensor 5 which is indicated by the dotted line. The assembly 1 and the fluid sensor 5 may together form a fluid sensor system 7 according to the invention.

The fluid sensor 5 may in particular be a quality sensor which is adapted to analyze the quality of the solution 4 in the tank 3. The fluid sensor 5 is preferably an optical sensor or an ultrasonic sensor. In the alternative, the sensor technology may be of any other type or a combination of different types.

The assembly 1 comprises a housing 9 for receiving the fluid sensor 5. Preferably, the housing 9 is further adapted for supporting and fixating the fluid sensor 5. The housing may encase the fluid sensor 5. Alternatively, wall sections of the fluid sensor 5 may also form a part of the housing 9.

The housing 9 comprises a bottom wall 11 and a top wall 13. It should be noted that the terms "top" and "bottom" refer to a vertical direction V. The vertical direction V is parallel with a gravitational direction G. As a consequence of the properties of gas bubbles (not shown) in a solution, the gravitational direction G is opposite to a bubble ascension direction A. The vertical direction V is perpendicular to a horizontal direction H.

The bottom wall 11 and the top wall 13 are spaced apart from each other in the vertical direction V and open up a sensor volume 15 in which the at least one fluid sensor 5 may be received.

The bottom wall 11 is provided with a lower flow-through opening 17 and the top wall 13 is provided with an upper flow-through opening 19. The presence of only one opening in each of the walls is just an example. Each of the walls 11 and 13 may be provided with more than one opening if necessary. Solution 4 may enter and exit the housing 9 through the openings 17 and 19 in order to be analyzed by the fluid sensor 5. When the assembly 1 is used, the sensor volume 15 is preferably completely filled with solution 4 and a continuous exchange of solution 4 between the sensor volume 15 and the outside 21 of the housing 9 is enabled by the openings 17 and 19.

The lower flow-through opening 17 is covered on the outside 21 of the housing 9 by a lower cover member 23 and the upper flow-through opening 19 is covered on the outside 21 of the housing 9 by an upper cover member 25. The cover members 23 and 25 are each spaced apart from its corresponding flow-through openings 17 and 19 in the vertical direction V.

The lower cover member 23 provides a lower outer flow-through opening 27 and the upper cover member 25 provides an upper outer flow-through opening 29. The outer flow-through openings 27 and 29 allow the exchange of solution 4 between the outside 30 of the assembly 1 and the sensor volume 15.

As a consequence of the above described design, a continuous flow-through passage 31 extends between the lower outer flow-through opening 27 and the upper outer flow-through opening 29. The continuous flow-through passage 31 is indicated by the dashed line.

Along the continuous flow-through passage 31, solution 4 may pass through the assembly 1 in order to get analyzed by the fluid sensor 5. The passage 31 may provide an unobstructed path for the solution 4. The continuous flow-through passage 31 passes the sensor volume 15. Preferably, the continuous flow-through passage 31 passes the sensor volume 15 in a center region of the sensor volume 15 with respect to the horizontal direction H.

Due to the flow-through openings 17 and 19, the intake of gas bubbles into the housing 9 is prevented. At the same time, the continuous flow-through passage 31 provides a flow of solution 4 through the housing.

It should further be noted that the assembly 1 according to the invention may overcome the need for filter members such as mesh material or semi permeable membranes. However, this does not exclude using such filter members in an assembly 1 according to the invention if desired.

In the first embodiment as described with respect to Fig. 1, the lower outer flow-through opening 27 is formed as a lower gap 33 between the bottom wall 11 and the lower cover member 23. The upper outer flow-through opening 29 is formed as an upper gap 35 between the top wall 13 and the upper cover member 25. The gaps 33 and 35 may form slit-like openings 27 and 29.

In order to provide a continuous flow of solution 4 along the continuous flow-through passage 31 through the assembly 1, the lower flow-through opening 17 is preferably aligned with the upper flow-through opening 19 perpendicular to the vertical direction V. In other words, if seen along the vertical direction V, the openings 17 and 19 overlap with each other. This alignment may also help in removing gas bubbles which, for example enter the housing 9 through the lower flow-through opening 17. Since gas bubbles will ascend along the bubble ascension direction A, the bubbles will directly flow towards the upper flow-through opening 19 and leave the housing 9.

Preferably, the continuous flow-through passage 31 meanders through the assembly or, in other words, follows a zigzag course. This may help in preventing the bubbles from entering the sensor volume 15. Such course is achieved by the cover members 23 and 25 which cover the openings 17 and 19. The cover members 23 and 25 overlap with the openings 17 and 19 when seen in the vertical direction V. Due to the presence of the cover members 23 and 25, horizontal sections of the continuous flow-through passage 31 are formed.

A lower section 37 of the continuous flow-through passage 31 extends basically horizontally from the lower flow-through opening 17 to the lower outer flow-through opening 27 between the bottom wall 11 and the lower cover member 23. An upper section 39 of the continuous flow-through passage 31 extends basically horizontally from the upper flow-through opening 19 to the upper outer flow-through opening 29 between the top wall 13 and the upper cover member 25.

Preferably, these horizontal sections 37 and 39 are as long as possible. In particular, the lengths of these sections 37 and 39 are preferably larger than the distance between the corresponding cover member 23 or 25 and its corresponding wall 11 or 13. Additionally or alternatively, the lengths of these sections 37 and 39 are preferably larger than the diameter of the corresponding flow-through openings 17 or 19.

In detail, the lower section 37 preferably has a section length 41 measured perpendicular to the vertical direction V from the lower flow-through opening 17 to the lower outer flow-through opening 27 that is larger than the distance 43 between the bottom wall 11 and the lower cover member 23. Additionally or alternatively, the section length 41 is preferably larger than the diameter 45 of the lower flow-through opening 17. Accordingly, the section length 47 of the upper section 39 is preferably larger than the distance 49 between the top wall 13 and the upper cover member 25 and/or larger than the diameter 51 of the upper flow-through opening 19.

In order to allow gas bubbles which have accumulated in the housing 9, in particular in the sensor volume 15 to leave the housing 9, the housing 9 is provided with at least one bubble outlet opening 53 which opens the housing 9 to the outside 30 of the assembly 1. gas bubbles tend to ascend along the bubble ascension direction A, these bubbles will most likely accumulate under the top wall 13. Therefore, an arrangement of the bubble outlet opening 53 adjacent to the top wall 13 is beneficial in order to easily vent out such gas bubbles.

At least one of the cover members 23 and 25 may be formed monolithically with its corresponding wall 11 or 13. Alternatively, at least one of the cover members 23 and 25 may be attached to the housing 9 or may just be arranged outside the housing 9 and kept in place by other means, such as being fixated to the tank 3 or another part of the fluid sensor system 7. According to an alternative embodiment, at least one of the cover members 23 or 25 may be formed as part of an outer housing (not shown) which at least partially surrounds the housing 9. It should finally be noted that at least one of the openings 17, 19, 27, 29 and 53 may have a cross-sectional shape that is adapted for preventing entrance of bubbles into the housing 9. Just by way of example, at least one of the openings may have a cross-section that tapers in the direction to the outside 30. Consequently, such an opening has a cross-sectional shape that is similar to a funnel, wherein the broad side of the funnel shape is arranged towards the sensor volume 15 and the thin side of the funnel shape is arranged towards the outside 21.

In the following, a second embodiment of a fluid sensor protection assembly 1 and a fluid sensor system 7 is described with respect to Fig. 2. For the sake of brevity, only the differences with respect to the first embodiment are described in detail. It should also be noted that some features of the second embodiment which are already described in detail with respect to the first embodiment have not been provided with reference numerals in Fig. 2 for a better visibility.

The second embodiment differs from the first embodiment in that the cover members 23 and 25 are provided with outer flow-through openings 27 and 29 that are formed as through holes 55 and 57 in the cover members 23 and 25. Just by way of example, the cover members 23 and 25 are shown as part of an outer housing 59 which surrounds the housing 9.

The assembly 1 according to the second embodiment is provided with a bubble outlet opening 53, this opening 53 is be formed as a through hole which extends through the housing 9 and the outer housing 59.

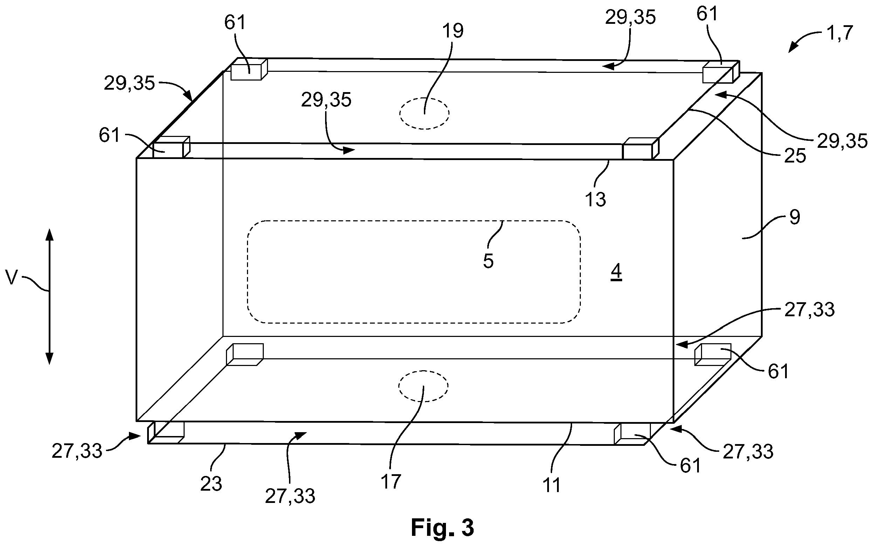

Finally, a third embodiment is described with respect to Fig. 3. Again, only the differences to the first and second embodiments as described above are described in detail for the sake of brevity. The assembly 1 according to the third embodiment is provided with cover members 23 and 25 that have overall plate-like shapes and that are attached to the housing 9 such that they are spaced apart from their corresponding wall 11 and 13. The cover members 23 are spaced apart from the corresponding wall 11 and 13 by spacers 61. The spacers 61 may be formed monolithically with the housing 9, with the cover members 23 or 25 or, alternatively, as separate parts which are fixated between the housing 9 and the cover members 23.

The flow-through openings 17 and 19 are arranged with respect to the cover members 23 and 25 such that they are each arranged in a central region of the cover members 23 and 25 perpendicular to the vertical direction V. On every side of the cover members 23 and 25 perpendicular to the vertical direction V, outer flow-through openings 29 and 31 are formed. These flows through openings 29 and 31 have each a slit-like shape and are formed as gaps 33 and 35 between the cover members 23 and 25 and the corresponding walls 11 and 13. As a consequence, the continuous flow-through passage 31 (not shown here) extends such that solution 4 may flow around the plate-like cover members 23 and 25 on its way to and from the flow-through openings 17 and 19.

As an alternative to the aforementioned embodiment, the cover members 23 or 25 may be arranged such that they do not form outer flow-through openings 29 and 31 on each side, but only on one, two or three sides.

It should be noted that an assembly 1 according to the invention may also be provided with a combination of the embodiments as described above. Just by way of example, an assembly 1 could be provided with a lower outer flow-through opening 27 that is provided as a through hole in the lower cover member 23 according to the second embodiment and with an upper outer flow-through opening 29 that is formed according to the first or third embodiment.

### REFERENCE NUMERALS

- 1: fluid sensor protection assembly
- 3: tank
- 4: solution
- 5: fluid sensor
- 7: fluid sensor system
- 9: housing
- 11: bottom wall
- 13: top wall
- 15: sensor volume
- 17: lower flow-through opening
- 19: upper flow-through opening
- 21: outside of the housing
- 23: lower cover member
- 25: upper cover member
- 27: lower outer flow-through opening
- 29: upper outer flow-through opening
- 30: outside of the assembly
- 31: continuous flow-through passage
- 33: lower gap
- 35: upper gap
- 37: lower section
- 39: upper section
- 41: section length of lower section
- 43: distance
- 45: diameter of the lower flow-through opening
- 47: section length of upper section
- 49: distance
- 51: diameter of the upper flow-through opening
- 53: bubble outer opening
- 55: lower through hole
- 57: upper through hole
- 59: outer housing
- 61: spacer
- A: bubble ascension direction
- G: gravitational direction
- V: vertical direction
- H: horizontal direction

## Claims

1. Urea sensor protection assembly (1) for protecting at least one fluid sensor (5) of a fluid sensor system (7) in a urea solution (4), against bubbles and/or particles, wherein the assembly (1) comprises a housing (9) for receiving the at least one fluid sensor (5), wherein the housing (9) comprises a bottom wall (11) and a top wall (13) which are spaced apart from each other in a vertical direction (V), wherein the bottom wall (11) is provided with at least one lower flow-through opening (17) and the top wall (13) is provided with at least one upper flow-through opening (19), wherein the lower and the upper flow-through openings (17, 19) are covered on an outside (21) of the housing (9) by a lower and an upper cover member (23, 25), respectively, wherein each cover member (23, 25) is spaced apart from the corresponding flow-through opening (17, 19) in the vertical direction (V) and provides at least one outer flow-through opening (27, 29), and wherein at least one continuous flow-through passage (31) extends between the at least one lower outer flow-through opening (27) and the at least one upper outer flow-through opening (29), **characterized in that** the housing (9) is further provided with at least one bubble outlet opening (53) that opens the housing (9) to an outside (30) of the assembly (1).

2. Urea sensor protection assembly (1) according to claim 1, wherein the at least one lower outer flow-through opening (27) is formed between the bottom wall (11) and the lower cover member (23) and/or the at least one upper outer flow-through opening (29) is formed between the top wall (13) and the upper cover member (25).

3. Urea sensor protection assembly (1) according to claim 1 or 2, wherein the at least one lower outer flow-through opening (27) and/or the at least one upper outer flow-through opening (29) are formed as through holes (55, 57) in the lower cover member (23) and/or upper cover member (25), respectively.

4. Urea sensor protection assembly (1) according to any of claims 1 to 3, wherein a lower section (37) of the continuous flow-through passage (31) extends basically horizontally from the lower flow-through opening (17) to the lower outer flow-through opening (27), and/or an upper section (39) of the continuous flow-through passage (31) extends basically horizontally from the upper flow-through opening (19) to the upper outer flow-through opening (29).

5. Urea sensor protection assembly (1) according to claim 4, wherein at least one of the sections (37, 39) has a section length (41, 47) that equals at least 1,5 times the smallest distance (43, 49) between the at least one cover member (23, 25) and its corresponding wall (11, 13).

6. Urea sensor protection assembly (1) according to claim 4 or 5, wherein at least one of the sections (37, 39) has a section length (41, 47) that equals at least 1,5 times the diameter (45, 51) of its corresponding flow-through opening (17, 19).

7. Urea sensor protection assembly (1) according to any of claims 1 to 6, wherein the at least one upper flow-through opening (19) and the at least one lower flow-through opening (17) are aligned with each other in the vertical direction (V).

8. Urea sensor protection assembly (1) according to any of claims 1 to 7, wherein the at least one bubble outlet opening (53) is arranged adjacent to the top wall (13).

9. Urea sensor protection assembly (1) according to any of claims 1 to 8, wherein at least one of the cover members (23, 25) is formed monolithically with the housing (9).

10. Urea sensor protection assembly (1) according to any of claims 1 to 9, wherein at least one of the cover members (23, 25) is formed by an outer housing (59) which at least partially surrounds the housing (9).

11. Urea sensor protection assembly (1) according to any of claims 1 to 10, wherein at least one of the flow-through openings (17, 19) has a cross section parallel with the vertical direction (V) that tapers in the direction of the corresponding cover member (23, 25).

12. Urea sensor system (7) comprising at least one urea sensor protection assembly (1) according to any of claims 1 to 11 and at least one fluid sensor (5) which is received in the housing (9).

## Patentansprüche

1. Harnstoffsensorschutzanordnung (1) zum Schützen mindestens eines Fluidsensors (5) eines Fluidsensorsystems (7) in einer Harnstofflösung gegenüber Bläschen und/oder Partikeln, wobei die Anordnung (1) ein Gehäuse (9) zur Aufnahme des mindestens einen Fluidsensors (5) aufweist, wobei das Gehäuse (9) eine Bodenwand (11) und eine Oberseitenwand (13) aufweist, die in der vertikaler Richtung (V) voneinander beabstandet sind, wobei die Bodenwand (11) mit mindestens einer unteren Durchströmungsöffnung (17) versehen ist und die Oberseitenwand (13) mit mindestens einer oberen Durchströmungsöffnung (19) versehen ist, wobei die untere Durchströmungsöffnung und die obere Durchströmungsöffnung (17, 19) an einer Außenseite (21) des Gehäuses (9) durch entsprechend ein unteres und ein oberes Abdeckungselement (23, 25) abgedeckt sind, wobei jedes Abdeckungselement (23, 25) von der jeweiligen Durchströmungsöffnung (17, 19) in der vertikalen Richtung (V) beabstandet ist und mindestens eine äußere Durchströmungsöffnung (27, 29) bereitstellt, und wobei mindestens ein Durchgang mit kontinuierlicher Durchströmung (31) zwischen der mindestens einen unteren äußeren Durchströmungsöffnung (27) und der mindestens einen oberen äußeren Durchströmungsöffnung (29) verläuft,
**dadurch gekennzeichnet, dass**
das Gehäuse (9) ferner mit mindestens einer Bläschenauslassöffnung (53) versehen ist, mit der das Gehäuse (9) zum Außenbereich (30) der Anordnung (1) offen ist.

2. Harnstoffsensorschutzanordnung (1) nach Anspruch 1, wobei die mindestens eine untere äußere Durchströmungsöffnung (27) zwischen der Bodenwand (11) und dem unteren Abdeckungselement (23) ausgebildet ist, und/oder die mindestens eine obere äußere Durchströmungsöffnung (29) zwischen der Oberseitenwand (13) und der dem oberen Abdeckungselement (25) ausgebildet ist.

3. Harnstoffsensorschutzanordnung (1) nach Anspruch 1 oder 2, wobei die mindestens eine untere äußere Durchströmungsöffnung (27) und/oder die mindestens eine obere äußere Durchströmungsöffnung (29) als Durchgangsbohrungen (55, 57) entsprechend in dem unteren Abdeckungselement (23) und/oder in dem oberen Abdeckungselement (25) ausgebildet sind.

4. Harnstoffsensorschutzanordnung (1) nach einem der Ansprüche 1 bis 3, wobei ein unterer Abschnitt (37) des Durchgangs für kontinuierliche Durchströmung (31) im Wesentlichen horizontal von der unteren Durchströmungsöffnung (17) zu der unteren äußeren Durchströmungsöffnung (27) verläuft, und/oder ein oberer Abschnitt (39) des Durchgangs für kontinuierliche Durchströmung (31) im Wesentlichen horizontal von der oberen Durchströmungsöffnung (19) zu der oberen äußeren Durchströmungsöffnung (29) verläuft.

5. Harnstoffsensorschutzanordnung (1) nach Anspruch 4, wobei mindestens einer der Abschnitte (37, 39) eine Abschnittslänge (41, 47) hat, die gleich dem 1,5-Fachen des kleinsten Abstands (43, 49) zwischen dem mindestens einen Abdeckungselement (23, 25) und seiner entsprechenden Wand (11, 13) entspricht.

6. Harnstoffsensorschutzanordnung (1) nach Anspruch 4 oder 5, wobei mindestens einer der Abschnitte (37, 39) eine Abschnittslänge (41, 47) hat, die mindestens dem 1,5-Fachen des Durchmessers (45, 51) seiner entsprechenden Durchströmungsöffnung (17, 19) entspricht.

7. Harnstoffsensorschutzanordnung (1) nach einem der Ansprüche 1 bis 6, wobei die mindestens eine obere Durchströmungsöffnung (19) und die mindestens eine untere Durchströmungsöffnung (17) in vertikaler Richtung (V) zueinander ausgerichtet sind.

8. Harnstoffsensorschutzanordnung (1) nach einem der Ansprüche 1 bis 7, wobei die mindestens eine Bläschenauslassöffnung (53) benachbart zu der Oberseitenwand (13) angeordnet ist.

9. Harnstoffsensorschutzanordnung (1) nach einem der Ansprüche 1 bis 8, wobei mindestens eines der Abdeckungselemente (23, 25) zusammen mit dem Gehäuse (9) als ein einziges Stück ausgebildet ist.

10. Harnstoffsensorschutzanordnung (1) nach einem der Ansprüche 1 bis 9, wobei mindestens eines der Abdeckungselemente (23, 25) durch ein Außengehäuse (59) gebildet ist, das das Gehäuse (9) zumindest teilweise umschließt.

11. Harnstoffsensorschutzanordnung (1) nach einem der Ansprüche 1 bis 10, wobei mindestens eine der Durchströmungsöffnungen (17, 19) einen Querschnitt hat, der parallel zur vertikalen Richtung (V) verläuft und sich in Richtung des entsprechenden Abdeckungselements (23, 25) verengt.

12. Harnstoffsensorsystem (7) mit mindestens einer Harnstoffsensorschutzanordnung (1) nach einem der Ansprüche 1 bis 11 und mindestens einem Fluidsensor (5), der in dem Gehäuse (9) enthalten ist.

## Revendications

1. Ensemble de protection de capteur d'urée (1) pour protéger au moins un capteur de fluide (5) d'un système de capteur de fluide (7) dans une solution d'urée (4), contre des bulles et/ou des particules, dans lequel l'ensemble (1) comprend un logement (9) pour recevoir ledit au moins un capteur de fluide (5), dans lequel le boîtier (9) comprend une paroi inférieure (11) et une paroi supérieure (13) qui sont espacées l'une de l'autre dans une direction verticale (V), dans lequel la paroi inférieure (11) est pourvue d'au moins une ouverture de passage inférieure (17) et la paroi supérieure (13) est pourvue d'au moins une ouverture de passage supérieure (19), dans lequel les ouvertures de passage inférieure et supérieure (17), 19) sont recouverts sur une face extérieure (21) du boîtier (9) par un élément de couverture inférieur et un élément de couverture supérieur (23, 25), respectivement, dans lequel chaque élément de couverture (23, 25) est espacé de l'ouverture de passage correspondante (17, 19) dans la direction verticale (V) et fournit au moins une ouverture de passage extérieure (27, 29), et dans lequel au moins un passage d'écoulement continu (31) s'étend entre ladite au moins une ouverture d'écoulement extérieure inférieure (27) et ladite au moins une ouverture d'écoulement extérieure supérieure (29), **caractérisé en ce que** le boîtier (9) est en outre pourvu d'au moins une ouverture de sortie de bulle (53) qui ouvre le boîtier (9) vers un extérieur (30) de l'ensemble (1).

2. Ensemble de protection de capteur d'urée (1) selon la revendication 1, dans lequel ladite au moins une ouverture de passage extérieure inférieure (27) est formée entre la paroi inférieure (11) et l'élément de couverture inférieur (23) et/ou ladite au moins une ouverture de passage extérieure supérieure (29) est formée entre la paroi supérieure (13) et l'élément de couverture supérieur (25).

3. Ensemble de protection de capteur d'urée (1) selon les revendications 1 ou 2, dans lequel ladite au moins une ouverture de passage extérieure inférieure (27) et/ou ladite au moins une ouverture de passage extérieure supérieure (29) sont formées comme des trous de passage (55, 57) dans l'élément de couverture inférieur (23) et/ou l'élément de couverture supérieur (25), respectivement.

4. Ensemble de protection de capteur d'urée (1) selon l'une des revendications 1 à 3, dans lequel une section inférieure (37) du passage d'écoulement continu (31) s'étend essentiellement horizontalement de l'ouverture d'écoulement inférieure (17) à l'ouverture d'écoulement extérieure inférieure (27), et/ou une section supérieure (39) du passage d'écoulement continu (31) s'étend essentiellement horizontalement de l'ouverture d'écoulement supérieure (19) à l'ouverture d'écoulement extérieure supérieure (29).

5. Ensemble de protection de capteur d'urée (1) selon la revendication 4, dans lequel au moins une des sections (37, 39) a une longueur de section (41, 47) qui est égale à au moins 1,5 fois la plus petite distance (43, 49) entre ledit au moins un élément de couverture (23, 25) et sa paroi correspondante (11, 13).

6. Ensemble de protection de capteur d'urée (1) selon la revendication 4 ou 5, dans lequel au moins une des sections (37, 39) a une longueur de section (41, 47) qui est égale à au moins 1,5 fois le diamètre (45, 51) de son ouverture de passage correspondante (17, 19).

7. Ensemble de protection de capteur d'urée (1) selon l'une des revendications 1 à 6, dans lequel l'au moins une ouverture de passage supérieure (19) et l'au moins une ouverture de passage inférieure (17) sont alignées l'une par rapport à l'autre dans la direction verticale (V).

8. Ensemble de protection de capteur d'urée (1) selon l'une des revendications 1 à 7, dans lequel l'ouverture de sortie de bulle (53), au nombre d'au moins une, est disposée à proximité de la paroi supérieure (13).

9. Ensemble de protection de capteur d'urée (1) selon l'une des revendications 1 à 8, dans lequel au moins un des éléments de couverture (23, 25) est formé de manière monolithique avec le boîtier (9).

10. Ensemble de protection de capteur d'urée (1) selon l'une des revendications 1 à 9, dans lequel au moins un des éléments de couverture (23, 25) est formé par un boîtier extérieur (59) qui entoure au moins partiellement le boîtier (9).

11. Ensemble de protection de capteur d'urée (1) selon l'une des revendications 1 à 10, dans lequel au moins l'une des ouvertures de passage (17, 19) a une section transversale parallèle à la direction verticale (V) qui se rétrécit en direction de l'élément de couverture correspondant (23, 25).

12. Système de capteur d'urée (7) comprenant au moins un ensemble de protection de capteur d'urée (1) selon l'une des revendications 1 à 11 et au moins un capteur de fluide (5) qui est reçu dans le boîtier (9).
